# EUROPEAN PATENT APPLICATION

(11) **EP 4 386 496 A1**
(43) Date of publication of application: **19.06.2024**
(21) Application number: 23212982.5
(22) Date of filing: 29.11.2023
(51) Int. Cl.: G05B 19/418, B29C 53/00

(54) **A METHOD FOR QUALITY CONTROL OF PACKAGES PRODUCED IN A ROLL-FED PACKAGING MACHINE**

(30) Priority: 16.12.2022 IT 202200025857
(71) Applicant: Tetra Laval Holdings & Finance S.A., 1009 Pully (CH)
(72) Inventor: Campo, Federico, 41123 Modena (IT); Bassissi, Fabio, 41123 Modena (IT); Ricco, Marco, 41123 Modena (IT)
(74) Representative: Tetra Pak - Patent Attorneys SE

(57) **Abstract**

The present invention relates to a method (100) for quality control of packages produced in a roll-fed packaging machine, wherein the roll-fed packaging machine comprises an image data capturing device arranged at a position along a web of packaging material. The method (100) comprising: obtaining (S102) image data depicting a section of the web, from the image data capturing device; identifying (S104) an anomaly in the section of the web of packaging material, using a machine learning model trained to identify anomalies in image data of a web of packaging material; and communicating (S112), in response to the identified anomaly, a signal indicating an action to be performed, to a control system of the packaging machine.

## Description

### Technical field

The present invention relates to the field of packaging technology. More particularly, it is related to methods and apparatuses for quality control of packages produced in a roll-fed packaging machine as well as a food production system thereof.

### Background of the invention

Within the food industry today, food package technology plays an important part. The food package has several important functions. Apart from branding of the product and presenting the customers with information, the food package also has an important role of ensuring food safety. The packaging materials used in the food package can be designed to provide strength and stability, so that the packages are not damaged during transportation. Furthermore, the packaging materials can form a protective environment for the food product so that it is protected from for example bacteria, germs, oxygen and sun light, thus prolonging shelf life. However, the packaging material is not the only thing that is important in the package. The package also needs to be sealed properly. Any damages to the packaging material or errors in the sealing can result in a breach of the protective environment. In roll-fed packaging systems for instance, the packages is made by forming a longitudinal sealing along an overlap between two ends of the packaging material such that a tube is formed. Thereafter, the packages can be formed from the tube by making a top and bottom transversal sealing.

There are thus many aspects of the food package which are important. Ensuring the quality of food packages produced in packaging machines is not an easy task. Today, a common way of doing this is to evaluate batches of the finished products manually. In addition to visually examining the exterior of the package, this also means opening packages to assess the sealing formed on the inside of the package. However, this is a tedious task which also leads to waste of product. Further, to ensure the quality, large quantities of packages has to be assessed. It is therefore need for an improved way of quality control of packages produced in packaging machines.

### Summary of the invention

The herein disclosed technology seeks to at least partly mitigate, alleviate or eliminate one or more of the above-mentioned deficiencies and disadvantages in the prior art. In particular, it is an object to provide a method and apparatus for quality control of packages produced in a roll-fed packaging machine.

The inventors have realized a new and improved way of evaluating the quality of packages utilizing machine learning. The present inventive concept further provides for continuously monitoring of the packages such that a higher confidence in the package quality can be achieved, compared to today's methods of evaluating samples manually. It further allows actions to be taken at an early stage, which can lead to a reduction of wasted product. The proposed use of a machine learning model facilitates a high throughput of image data to be analyzed, while being able to detect even small anomalies.

Various aspects and embodiments of the disclosed invention are defined below and in the accompanying independent and dependent claims.

According to a first aspect, there is provided a method for quality control of packages produced in a roll-fed packaging machine, wherein the roll-fed packaging machine comprises an image data capturing device arranged at a position along a web of packaging material. The method comprises: obtaining image data depicting a section of the web, from the image data capturing device; identifying an anomaly in the section of the web of packaging material, using a machine learning model trained to identify anomalies in image data of a web of packaging material; and communicating, in response to the identified anomaly, a signal indicating an action to be performed, to a control system of the packaging machine.

By the wording "quality control" it is herein meant an evaluation of one or more quality aspects of the package, and in particular of the web of packaging material. A quality aspect may be related to food safety, such as looking for any damages or ruptures of the web of packaging material caused e.g. by handling or transport of the package material, or deficiencies in the packaging material, such as misplacement of pre-laminated holes, caused e.g. by errors in manufacturing of the packaging material. Another quality aspect may be related to aesthetics of the package, such as looking for deformations in the package, the presence of a splice (i.e. an area where two ends of rolls of packaging material are joined together) or misprints/misalignment in the decor of the package. A further example of quality aspect may be detecting if the web of packaging material is misaligned in the packaging machine. Any visible sign in the image data which can be relevant for the quality control of the web of packaging material is herein referred to as an anomaly. An anomaly may be related to one or more different quality aspects. For example, an anomaly such as a deformation of the web of packaging material may be relevant both from a food safety aspect and from an aesthetic aspect.

By the wording "the package" or "a package" as used throughout the present disclosure, it is meant a package which is formed of a part of the web of packaging material comprising the depicted section of the web in which an anomaly may be present, unless otherwise stated or otherwise understood from the context. For instance, if an anomaly is identified in a portion of the web of packaging material, and if it is not dealt with right away, an action may be to later on discard the package which comprises the anomaly.

By the wording "produced" as in "produced in a roll-fed packaging machine", it is herein meant that the package either has been produced, or is being produced in the roll-fed packaging machine.

The image data capturing device may for instance be a camera. The image data may comprise a single frame captured by the image data capturing device. Alternatively, the image data may comprise a plurality of subsequent frames captured by the image data capturing device.

The depicted section of the web should be construed as a limited area of the web in a feed direction (or longitudinal direction) of the web. In a width direction (or lateral direction), the depicted section of the web may span over a sub-portion of the web. A sub-portion may e.g. be a first edge section, an inner section or a second edge section. The depicted section of the web may span over the entire width of the web.

The action to be performed may depend on the identified anomaly. Communicating the signal indicating the action to be performed may comprise determining the action to be performed based on the identified anomaly.

The wording "identifying an anomaly" may be interpreted as detecting any possible signs of anomalies in the image data and determining whether those are anomalies or not. It should be further noted that even though it is stated that an anomaly is identified, several anomalies may be identified in the image data. Put differently, the step of identifying an anomaly may comprise identifying one or more anomalies.

The method may be repeated (i.e. by repeating the steps of the method iteratively) in order to perform a continuous quality control of the web of packaging material. Thus, it should be noted that the obtained image data in each iteration can depict different sections of the web of packaging material. Further, each iteration may correspond to a later on formed package. Put differently, the image data may in each iteration depict a section of the web corresponding to a different package.

The proposed method may be advantageous in that it may be possible to detect any potential anomalies early on in the packaging machine, by looking at the web of packaging material. This may in turn allow an error or mitigating action to quickly be performed, in order to reduce downtime, or waste of product, and to remove any insufficient packages. All in all, the present inventive concept may provide for a more robust and reliable detection anomalies such as misalignment of the web, rupture and damage of the packaging material which may compromise the food safety or integrity of the production process. This may lead to improved quality of the packages, reduction in insterilities, and reduced waste.

In a further example, the proposed method may allow an anomaly to be identified, but instead of stopping the machine to deal with the anomaly, it may be advantageous to let the machine continue to run and deal with the anomaly later on. For example, if it has been determined that a package should later on be discarded, the package machine may be instructed to not fill that package with food product. Thus, less waste of food product may be achieved.

The image data may depict an edge section of the web. The edge section may in other words be an outer portion of the web of packaging material. Identifying the anomaly may comprise identifying the anomalies in the edge section of the web of packaging material.

Damages in the web of packaging material may be most commonly present in the edge section of the web. Thus, by having the image data depicting the edge section of the web, the amount of data that the machine learning model has to process may be reduced, while still maintaining a high identification rate of anomalies in the web of packaging material. Further, any anomalies present in the edge section may especially have a negative effect on a longitudinal sealing of the package, so by identifying these types of anomalies early on in the process may be important for ensuring food safety of the packages.

Moreover, looking at the edge section of the web may be further advantageous in that it can give an indication of whether the web of packaging material is misaligned in the packaging machine.

Identifying the anomaly may comprise: determining, in the image data, data indicative of the anomaly, and classifying the data indicative of the anomaly as representing an anomaly or not.

Determining the data indicative of the anomaly may be performed by image or object segmentation. Classifying the data indicative of the anomaly may be performed by a discriminator applied to the image segmentation.

Classifying the data indicative of an anomaly as representing an anomaly may further comprise determining a type and/or degree of severity of the anomaly. The method may further comprise determining the action to be performed based on the type and/or degree of severity of the anomaly.

Depending on the severity of the anomaly, or the type of anomaly, it may be advantageous to take different actions. For example, a severe rupture of the web of packaging material may compromise the food safety of later formed package. In such case, the package may need to be discarded. If instead the web of packaging material only has a minor dent, the package may be discarded for aesthetic reasons, or kept despite the dent.

The action may be any one of (i) rejecting or accepting the package comprising the anomaly, (ii) sending a notification signal to an operator of the packaging machine, (iii) stopping the packaging machine and (iv) adjusting settings of the packaging machine.

By having a reject or accept action, deficient packages (i.e. packages formed by portions of the web of packaging material comprising an anomaly) can automatically be discarded based on the identified anomaly. A notification signal may be sent to the operator e.g. if it is detected that anomalies of a certain type is detected or if a number of identified anomalies increases. This may indicate e.g. that something in the handling of the packaging material is unsatisfactory, which could be corrected by the operator. As another example, the identified anomaly may be that the web of packaging material is not properly aligned. Sending a notification to the operator allows him/her to go through the packaging machine to identify any potential problems and correct them early on. Stopping the packaging machine may be performed in case a more severe deficiency is detected in a (or several) package(s) which potentially could lead to a large amount of deficient packages, or that something in the packaging machine goes wrong which can lead to downtime in the packaging process. If instead the deficiency is less severe, settings of the packaging machine may be adjusted to correct the errors.

The image data of the section of the web may be associated with a package to be formed. Communicating the signal indicating the action to be performed may further comprise communicating a package identifier of the package associated with the image data. In other words, the package identifier may associate the image data of the edge section of the web with the package which is later formed.

A possible associated advantage may be that the package identifier can be used to link a package with the action to be performed, if the action is performed in a later stage in the packaging machine. For example, if the action is to reject a package, the package identifier may be used to know which package corresponds to the section of the web comprising the anomaly.

The method may further comprise: collecting the image data as training data, and re-training the machine learning model based on the training data. This may facilitate a continuous improvement of the machine leaning model, and thus improve the quality control of the disclosed inventive concept.

The image data capturing device may be a linear camera. In other words, the image data capturing device may be a line-scan camera. The image data may comprise a number of consecutive frames captured by the linear camera, such that a two-dimensional image of a section of the web can be formed. Using a linear camera may be advantageous in that it provides an efficient way of continuously acquiring image data of the web.

The linear camera may be arranged to capture image data of the web of packaging material at a position of a roller in the roll-fed packaging machine. Capturing the image data of the web at the roller may be advantageous in that the movement of the web is low, which can lead to better image data. By using a linear camera, any distortions of the image data due to the shape of the roller can be reduced.

The image data may depict a non-printed side of the packaging material. The non-printed side may e.g. be the side which will form the inside of the package. By looking at the non-printed side of the packaging material, any anomalies present in the packaging material may be more clearly visible, than if the printed side of the packaging material would be used instead.

According to a second aspect, there is provided a quality control apparatus for quality control of packages produced in a roll-fed packaging machine, wherein the roll-fed packaging machine comprises an image data capturing device arranged at a position along a web of packaging material. The control device comprises circuitry configured to execute: an obtaining function configured to obtain image data depicting an section of the web, from the image data capturing device; an identifying function configured to identify an anomaly in the section of the web of packaging material, using a machine learning model trained to identify anomalies in image data of a web of packaging material; and a communicating function configured to, in response to the identified anomaly, communicate a signal indicating an action to be performed, to a control system of the packaging machine.

Identifying anomalies by the identifying function may comprise: determining, in the image data, data indicative of an anomaly, and classifying the data indicative of an anomaly as representing an anomaly or not.

The circuitry may be further configured to execute: a collecting function configured to collect the image data as training data, and a re-training function configured to re-train the machine learning model based on the training data.

The above-mentioned features of the first aspect, when applicable, apply to this second aspect as well. In order to avoid undue repetition, reference is made to the above.

According to a third aspect, there is provided a food production system. The food production system comprises: a roll-fed packaging machine configured to produce packages, an image data capturing device arranged at a position along a web of packaging material in the roll-fed packaging machine and configured to capture image data depicting a section of the web of packaging material, and a quality control apparatus for quality control of packages produced in a roll-fed packaging machine according to the second aspect.

The above-mentioned features of the first and second aspect, when applicable, apply to this third aspect as well. In order to avoid undue repetition, reference is made to the above.

According to a fourth aspect, there is provided an upgrade kit to be applied on a roll-fed packaging machine for performing quality control. The upgrade kit comprises: an image data capturing device; and a quality control apparatus according to the second aspect.

The above-mentioned features of the first, second and third aspect, when applicable, apply to this fourth aspect as well. In order to avoid undue repetition, reference is made to the above.

According to a fifth aspect, there is provided a non-transitory computer-readable storage medium. The non-transitory computer-readable storage medium stores one or more programs configured to be executed by one or more processors of a processing system, the one or more programs comprising instructions for performing the method according to the first aspect.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The above-mentioned features of the first aspect, when applicable, apply to this fifth aspect as well. In order to avoid undue repetition, reference is made to the above.

According to a sixth aspect, there is provided a computer program product. The computer program product comprises instructions which, when the program is executed by a computer, cause the computer to carry out the steps of the method of the first aspect.

The above-mentioned features of the first aspect, when applicable, apply to this sixth aspect as well. In order to avoid undue repetition, reference is made to the above.

The machine learning model may be a deep learning model. The deep learning model should be understood to be a model based on deep learning. Deep learning should be understood to be machine learning in which hypotheses take the form of complex algebraic circuits with tunable connection strengths. The word "deep" refers to the fact that the circuits are typically organized into many layers, which means that computation paths from inputs to outputs have many steps.

A further scope of applicability of the present disclosure will become apparent from the detailed description given below. However, it should be understood that the detailed description and specific examples, while indicating some variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a device" or "the device" may include several devices, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Figure 1 is a flow chart illustrating the steps of a method for quality control of packages produced in a roll-fed packaging machine.
Figure 2 schematically illustrates a quality control apparatus.
Figure 3 illustrates, by way of example, a food production system comprising a quality control apparatus.
Figure 4A to 4D illustrates, by way of example, different ways of positioning an image data capturing device in relation to a web of packaging material.
Figure 5 illustrates an upgrade kit for quality control.
Figure 6 illustrates a non-transitory computer-readable storage medium.

### Detailed description

The present inventive concept will now be described more fully hereinafter with reference to the accompanying drawings, in which some variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

It will also be appreciated that when the present disclosure is described in terms of a method, it may also be embodied in apparatus or device comprising one or more processors, one or more memories coupled to the one or more processors, where computer code is loaded to implement the method. For example, the one or more memories may store one or more computer programs that perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth.

It will also be understood that, although the term first, second, etc. may be used herein to describe various elements or features, these elements should not be limited by these terms. These terms are only used to distinguish one element from another. For example, a first function could be termed a second function, and, similarly, a second function could be termed a first function, without departing from the scope of the embodiments. The first function and the second function are both functions, but they are not the same function.

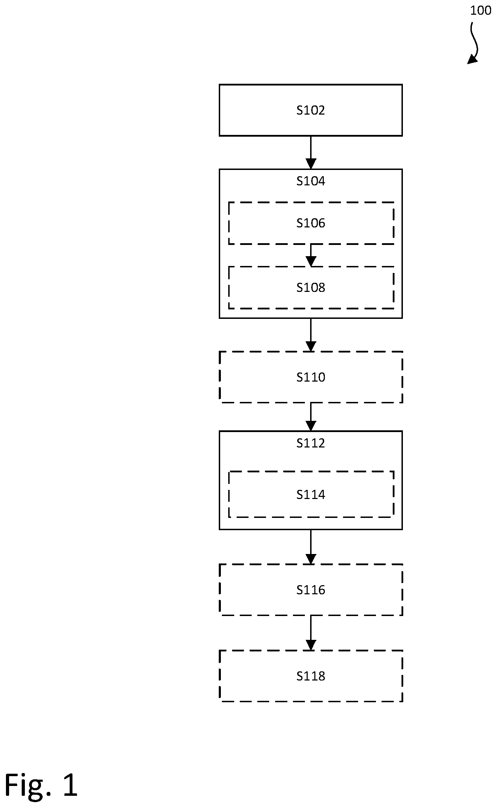

A method for quality control of packages produced in a roll-fed packaging machine, as well as a quality control apparatus, a food production system thereof, an upgrade kit and a non-transitory computer-readable storage medium will now be described with reference to Fig. 1 to Fig. 6.

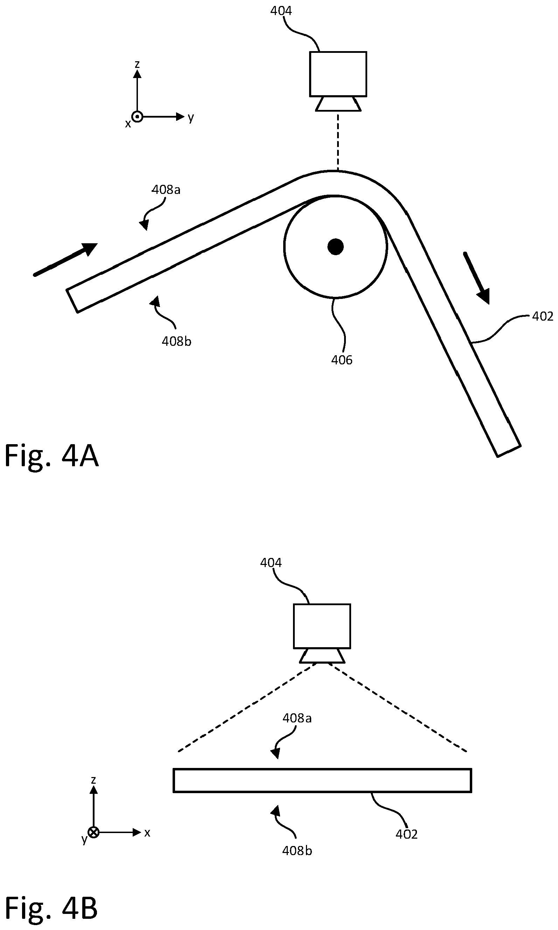

Figure 1 is a flow chart illustrating the steps of a method 100 for quality control of packages produced in a roll-fed packaging machine. In roll fed packaging machines, such as the Tetra Brik^{™} system marketed by Tetra Pak^{™}, a web of packaging material is generally fed from a reel of packaging material. From the web of packaging material, a tube can then be formed, which is filled with a food product. From a lower end of the tube, the packages can be continuously formed. According to the present disclosure, the roll-fed packaging machine comprises an image data capturing device. The image data capturing device is arranged at a position along a web of packaging material in the packaging machine. Thus, the image data capturing device may be positioned at any position along the web of packaging material, before the tube is formed. The positioning of the image data capturing device is further discussed in connection with Fig. 4A to 4D. The packages formed by the roll-fed packaging machine may be carton based packages containing food products. More specifically, the packages may comprise a carton layer and at least one plastic layer.

Fig. 1 illustrates one example of the method 100. In addition, a number of optional steps of the method 100, forming a number of alternative variants, is shown in broken lines. It should be noted that the method 100 may be performed iteratively for a number of consecutive time instances. Put differently, the method 100 may be repeated for providing a continuous quality control of the packages produced by the roll-fed packaging machine. In each iteration, the obtained image data (as will be further discussed below) depicts a different section of the web of packaging material.

In the following, the different steps are described in more detail with reference to Fig. 1. Even though illustrated in a specific order, the steps of the method 100 may be performed in any suitable order, in parallel, as well as multiple times. For example, steps S116 and S118, as will be further discussed below, can be performed at any point in time after step S102, independently of the other steps.

Image data depicting a section of the web is obtained S102, from the image data capturing device. Optionally, obtaining S102 the image data comprises instructing the image data capturing device to capture the image data. It should be noted that the image data need not to have been obtained directly from the image data capturing device. For example, the image data capturing device may capture the image data and then transmit it to an intermediate storage, from which it can be obtained by any device performing the method 100.

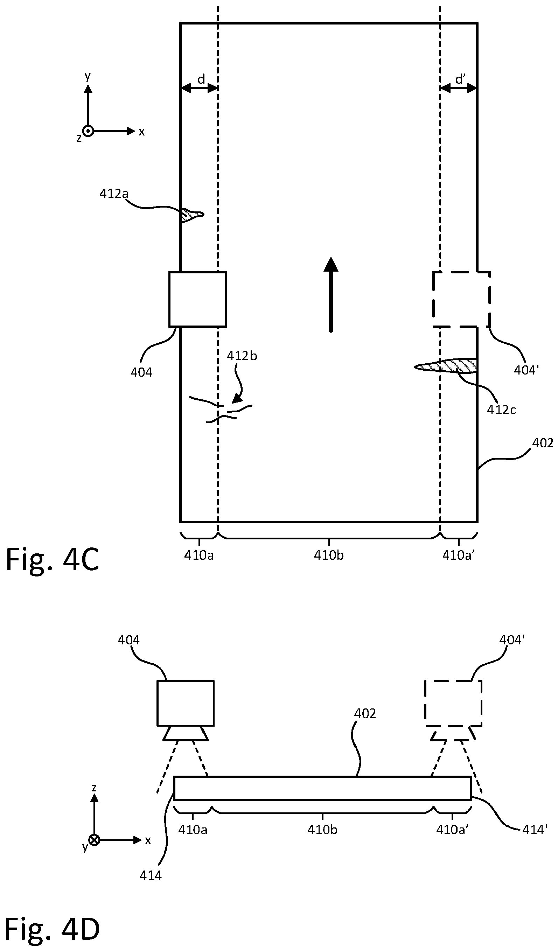

The image data may depict a section of the web of packaging material which is relevant for the quality control to be performed. In one example, the image data depicts an edge section of the web of packaging material. The edge section, as illustrated e.g. in Fig. 4C, may be an outer portion defined from an edge of the web and inwards of the web by a distance d. It goes without saying that the image data may depict an edge section of any of the two sides of the web. The image data may depict both edge sections of the web. In another example, the image data depicts an inner section of the web. The inner section may be any portion of the web between the outer portions. In another example, the image data depicts the entire width of the web of packaging material.

The image data may comprise a single frame of the web of packaging material. Alternatively, the image data may comprise a series of frames of the web. Put differently, the image data may comprise a plurality of subsequent frames. The plurality of subsequent frames may be merged together to form a single image, before being used in a subsequent step of the method 100. The image data capturing device may be a linear camera. A linear camera captures in general a row of pixels at each timeframe. Thus, in this example, the image data comprises a number of frames which are merged together to form a single, two-dimensional image. Using a linear camera to capture one row of pixels in each frame may allow for the different frames of the image data to be captured at an interval independent of a speed of the web. In other words, the consecutive frames of the image data may be captured at a predefined frame rate regardless of the speed of the web. This may be advantageous in that the method becomes more robust to variations in the speed of the web. The linear camera may be arranged to capture image data of the web of packaging material at a position of a roller in the roll-fed packaging machine. The positioning of the camera is further discussed below, in connection with Fig. 4A.

The image data may depict a non-printed side of the packaging material. In other words, the image capturing device may be arranged at a position in view of an inside of the packaging material.

The image data capturing device may be a camera configured to capture image data of the web. The camera may for instance be a linear camera as mentioned above, or a high speed camera. The image capturing device may comprise a plurality of cameras. Each camera may be configured to capture images of different portions of the web of packaging material. In such case, the obtained image data may comprise a plurality of images of the web captured by the plurality of cameras. The plurality of images may be merged to form a single image, before being used in a subsequent step of the method 100.

Moving on, an anomaly is identified S104 in the section of the web of packaging material, using a machine learning model trained to identify anomalies in image data of a web of packaging material. In other words, the anomaly may be identified in the image data depicting the section of the web. Put differently, the image data may be inputted into the machine learning model. Before inputting the image data to the machine leaning model, the image data may be pre-processed. The pre-processing of the image data may include, but are not limited to, reshaping, normalization and/or cropping of the image data. The machine learning model may then output information indicative of the presence of any anomalies present in the web of packaging material depicted in the image data. The anomaly identified S104 may comprise one or more of: an anomaly in the edge section of the web of packaging material, a presence of a splice in the web and/or an anomaly associated to the splice. In particular, a splice is defined as a joining portion between two different webs, e.g. joined together by sealing.

The machine learning model may comprise one or more sub-networks. The machine learning model may comprise a convolutional neural network. The machine learning model may output a numerical score or label indicating whether an anomaly is present or not. The machine learning model may output a type of anomaly that has been identified. In another example, the machine learning model may output what action to perform in response to the identified anomaly. For instance, the machine learning model may output a label indicating whether the later on formed package should be discarded or not. The output of the machine learning model may further indicate a number of anomalies, position of the anomaly, and size and shape of the anomaly. The output of the machine learning model may depend on what type of packages or packaging material is assessed. For example, aseptic packages may be assessed differently from non-aseptic packages. It goes without saying that the anomaly is only identified if there are any anomalies present in the image data. In case the method 100 is performed iteratively, anomalies may only be identified in some instances of image data.

The machine learning model may be trained using supervised leaning, i.e. by using pairs of image data and associated labels.

In case the image data depicts an edge section of the web, identifying S104 the anomaly may comprise identifying the anomaly in the edge section of the web of packaging material.

Identifying S104 the anomaly may comprise determining S106, in the image data, data indicative of the anomaly. Identifying S104 the anomaly may further comprise classifying S108 the data indicative of the anomaly as representing an anomaly or not.

Determining S106 the data indicative of the anomaly may be performed by an image segmentation task. The data indicative of the anomaly may thus be an segmented image. The image segmentation task may be a semantic segmentation or an instance segmentation. The image segmentation task may be performed using an image segmentation network. The image segmentation network may be part of the machine learning model. For example, the image segmentation network may be an auto-encoder, such as a Variational Autoencoder, a Denoising Autoencoder, or a Convolutional Autoencoder. As another example, the image segmentation network may be the so called U-Net. In such case, the U-Net may first encode the image data into a lower dimensional latent representation. Then, the U-Net may decode the latent representation back to a mask of the image data. The mask may be a binary mask, i.e. comprising either black or white pixels. The white pixels may for instance represent a faulty part of the web (i.e. indicative of an anomaly), while the black pixels may represent a healthy part of the web. The image segmentation network may comprise a number of sub-segmentation networks trained for different subtasks.

Classifying S108 the data indicative of the anomaly as representing an anomaly or not may be performed by a discriminator network. The discriminator network may in other words be a classification network. The discriminator network may be part of the machine learning model. The discriminator network may be configured to determine whether the data indicative of the anomaly actually is an anomaly. The discriminator may for example look at a size and shape of a possible anomaly to determine if it should be classified as an anomaly or not. In a more specific example, the discriminator may look at the number of pixels, along a feed direction of the web, that constitutes a potential anomaly. As described above, the discriminator may look at the white and black pixels in the mask of the image data outputted by the U-Net. The discriminator may for instance look as the size or shape of an area of white pixels of the segmented image.

Moving on, in response to an identified anomaly, a signal indicating an action to be performed is communicated S112 to a control system of the packaging machine.

The action to be performed may be determined S110 based on the identified anomaly. This may be done either as a separate step (as illustrated herein), as part of the step of identifying S104 the anomaly, or as part of the step of communicating S112 the signal indicating the action to be performed, in response to an identified anomaly. Classifying S108 the data indicative of an anomaly as representing an anomaly or not may further comprise determining a type and/or degree of severity of the anomaly. Determining S110 the action to be performed may be further based on the type and/or degree of severity of the anomaly.

The action may be any one of (i) rejecting or accepting the package comprising the anomaly, (ii) sending a notification signal to an operator of the packaging machine, (iii) stopping the packaging machine and/or (iv) adjusting settings of the packaging machine. It should be noted that more than one action may be determined to be performed. As one example, a package may be rejected, and settings of the packaging machine may be adjusted.

The image data depicting the section of the web may be associated with a package to be formed. A package identifier may be used to associate the image data with the package. Communicating S112 the signal indicating the action to be performed may further comprise communicating S114 the package identifier of the package associated with the image data. The package identifier may be used by the control system or any other device, or by an operator or user of the packaging machine, to know which package may comprise an identified anomaly and/or to which package the action should be performed. The package identifier may be a unique identifier of the package. The package identifier may e.g. be a number printed on the packaging material or a printed code, such as a two-dimensional barcode or QR code. The package identifier may be depicted in the image data and extracted therefrom. Alternatively, the package identifier may be read e.g. by a scanner. Alternatively, the package identifier may be provided in a tag, such as an RFID or NFC tag, and be obtained by an RFID or NFC tag reader. The package identifier may be further used to link data relating to machine settings used when producing the package. The package identifier may be further used to link an operator, or operating conditions during loading of the reel of packaging material into the packaging machine. The above mentioned data linked to the package may be used to find insufficient handling characteristics or machine settings which can be used as feedback in further improving quality of produced packages.

The method 100 may further comprise collecting S116 the image data as training data. Collecting S116 the image data may comprise transmitting the image data to a user group, and in response, receiving a user input indicating whether or not the image data depicts an anomaly. The user input may be included in the training data as a label of the image data. The user group may comprise an operator of the packaging machine or an expert in evaluating the image data. The method 100 may further comprise re-training S118 the machine learning model based on the training data.

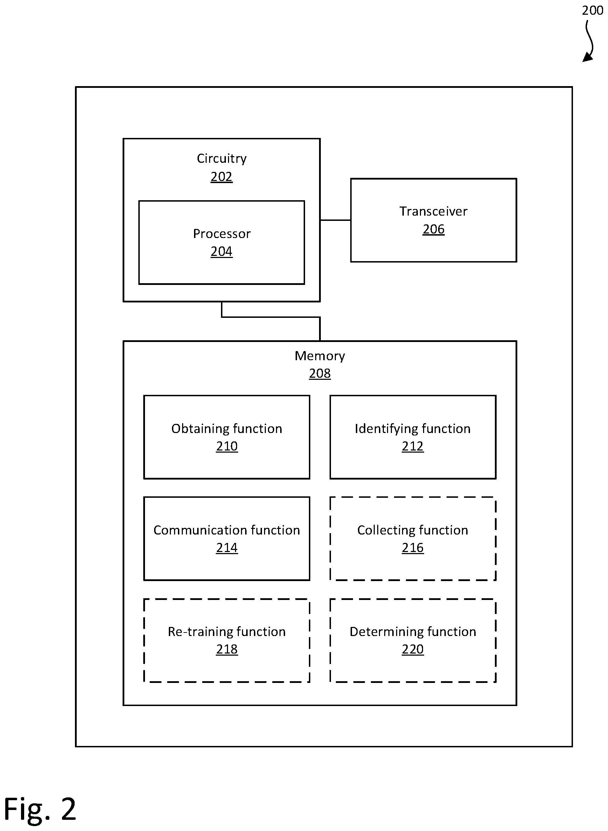

Figure 2 is a schematic illustration of a quality control apparatus 200 of the present inventive concept. The quality control apparatus 200 is configured to perform quality control of packages produced in a roll-fed packaging machine. In particular, the quality control apparatus 200 is configured to perform the method 100 as described above in connection with Fig. 1. Any features, aspects or advantages described above in connection with the method 100 applies also to the quality control apparatus 200 as described below, and vice versa. To avoid undue repetition, reference is made to the above.

The quality control apparatus 200 may be provided as an integral part of the roll-fed packaging machine. More specifically, the quality control apparatus 200 may be part of a control system of the roll-fed packaging machine. Alternatively, the quality control apparatus 200 may be provided externally to the roll-fed packaging machine. In such case, the quality control apparatus 200 may be communicatively connected to the roll-fed packaging machine.

The quality control apparatus 200 comprises circuitry 202. The circuitry 202 may physically comprise one single circuitry device. Alternatively, the circuitry 202 may be distributed over several circuitry devices. As shown in the example of Fig. 2, the quality control apparatus 200 may further comprise a transceiver 206 and a memory 208. The circuitry 202 being communicatively connected to the transceiver 206 and the memory 208. The circuitry 202 may comprise a data bus, and the circuitry 202 may communicate with the transceiver 206 and/or the memory 208 via the data bus.

The circuitry 202 may be configured to carry out overall control of functions and operations of the quality control apparatus 200. The circuitry 202 may include a processor 204, such as a central processing unit (CPU), microcontroller, or microprocessor. The processor 204 may be configured to execute program code stored in the memory 208, in order to carry out functions and operations of the quality control apparatus 200.

The transceiver 206 may be configured to enable the quality control apparatus 200 to communicate with other devices or apparatuses. For example, the quality control apparatus 200 may communicate with a control system of the roll-fed packaging machine, e.g. by the transceiver 206. In another example, the quality control apparatus 200 may be communicatively connected to an image data capturing device, e.g. by the transceiver 206. The transceiver 206 may both transmit data from and receive data to the quality control apparatus 200. The transceiver 206 may communicate over wired or wireless communication protocols (e.g. Bluetooth, Wi-Fi, cellular communication etc.).

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long term data storage and a volatile memory that functions as system memory for the quality control apparatus 200. The memory 208 may exchange data with the circuitry 202 over the data bus. Accompanying control lines and an address bus between the memory 208 and the circuitry 202 also may be present.

Even though not explicitly illustrated in Fig. 2, the quality control apparatus 200 may comprise input devices such as one or more of a keyboard, a mouse, and a touchscreen. A user input may for instance be used in collecting image data as training data as will be further described below. The user may provide a user input as a label of the image data. The user input may thus function as feedback to the method or quality control apparatus for improving the performance of the machine learning model. The quality control apparatus 200 may further comprise a display for providing output to the user, such as the image data.

Functions and operations of the quality control apparatus 200 may be implemented in the form of executable logic routines (e.g., lines of code, software programs, etc.) that are stored on a non-transitory computer readable recording medium (e.g., the memory 208) of the quality control apparatus 200 and are executed by the circuitry 202 (e.g. using the processor 204). Put differently, when it is stated that the circuitry 202 is configured to perform a specific operation, or execute a specific function, the processor 204 of the circuitry 202 may be configured execute program code portions stored on the memory 208, wherein the stored program code portions correspond to the specific operation or function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. Also, while the described functions and operations may be implemented in software, such functionality may as well be carried out via dedicated hardware or firmware, or some combination of one or more of hardware, firmware, and software. The following operations may be performed by the quality control apparatus 200, and may be stored as functions on a non-transitory computer readable recording medium. An obtaining function 210, an identifying function 212, and a communication function 214. The circuitry 202 may be further configured to execute one or more of a collecting function 216, a re-training function 218 and/or a determining function 220. It should be noted that the distribution of the functions of the quality control apparatus 200 as described herein should be seen as a non-limiting example, as they may be implemented in any suitable way.

The obtaining function 210 is configured to obtain image data depicting an section of the web, from the image data capturing device. As stated above in connection with Fig. 1, the image data capturing device is arranged at a position along the web of packaging material. The image data capturing device may be a linear camera. The linear camera may be arranged to capture image data of the web of packaging material at a position of a roller in the roll-fed packaging machine. The image data may depict a non-printed side of the packaging material.

The identifying function 212 is configured to identify an anomaly in the section of the web of packaging material, using a machine learning model trained to identify anomalies in image data of a web of packaging material. Identifying the anomaly by the identification function 212 may comprise determining, in the image data, data indicative of the anomaly, and classifying the data indicative of the anomaly as representing an anomaly or not. Classifying the data indicative of the anomaly as representing an anomaly or not may further comprise determining a type and/or degree of severity of the anomaly.

The image data may depict an edge section of the web of packaging material. The identifying function 212 may be configured to identify the anomaly in the edge section of the web of packaging material.

The communicating function 214 is configured to, in response to an identified anomaly, communicate a signal indicating an action to be performed, to a control system of the packaging machine.

The action may be any one of (i) rejecting or accepting the package comprising the anomaly, (ii) sending a notification signal to an operator of the packaging machine, (iii) stopping the packaging machine and (iv) adjusting settings of the packaging machine.

The image data of the section of the web may be associated with a package to be formed. Communicating, by the communication function 214 the signal indicating the action to be performed may further comprise communicating a package identifier of the package associated with the image data.

The determining function 220 may be configured to determine the action to be performed based on the identified anomaly. The determining function 220 may be configured to determine the action to be performed based on the type and/or degree of severity of the anomaly.

The collecting function 216 may be configured to collect the image data as training data.

The re-training function 218 may be configured to re-train the machine learning model based on the training data.

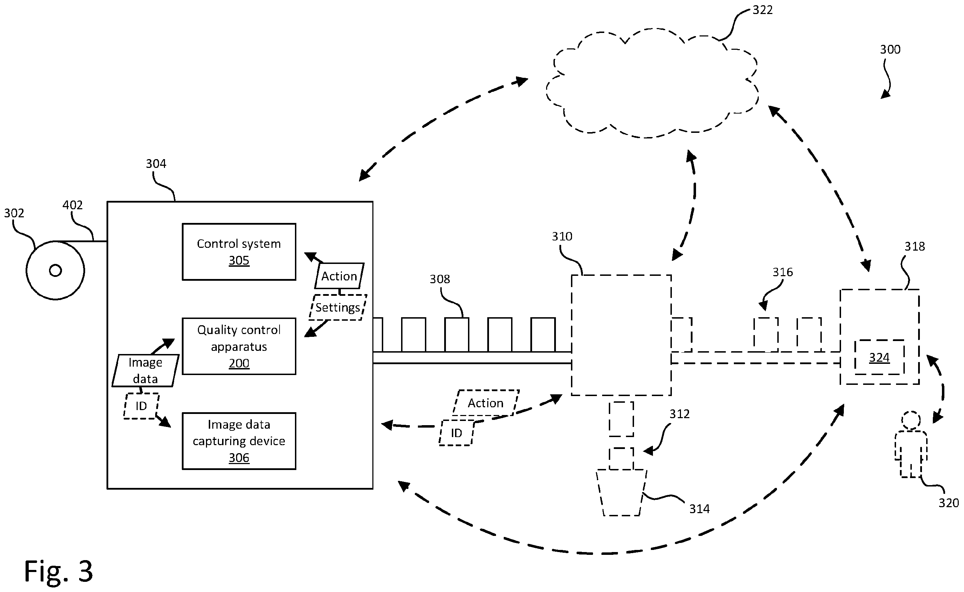

Figure 3 generally illustrates, by way of example, a food production system 300 in accordance with the present inventive concept. The dashed lines indicates parts which are optional. The food production system 300 may be seen as any type of food processing line for filling and packaging food products.

The food production system 300 comprises a roll-fed packaging machine 304, also referred to as packaging machine or filling machine. The packaging machine 304 is a roll-fed packaging machine used for producing food packages. More specifically, the packaging machine 304 may be used for packaging liquid food products in carton-based packages. Already in the 1940s this type of packaging machines was introduced by Tetra Pak, and it is today a well-known approach for packaging milk and other liquid food products in a safe and cost-efficient manner. The general approach can also be used for non-liquid food products, such as potato crisps. In addition, the general approach can also be used for non-carton based packages.

The packaging material is often printed and prepared in packaging material production centers, also referred to as converting factories, and is shipped to a site where the packaging machine 304 is placed, e.g. a dairy. Usually the packaging material is loaded onto a reel 302 before being transported. After arriving at the site, the reel 302 is placed in the packaging machine 304, or fed into the packaging machine 304 as illustrated in herein.

During production a web 402 of packaging material can be fed from the reel 302 into and through the packaging machine 304. Even though not illustrated in Fig. 3, the packaging material may pass through a sterilization device, e.g. a hydrogen peroxide bath or an LVEB (Low-Voltage Electron Beam) station, for ensuring that the web 303 is free from unwanted microorganisms. Before providing the food product, a tube can be formed from the web 402 by forming a longitudinal sealing. The food product can be fed into the tube via a filling pipe (not shown) and a valve (not shown) may be used for regulating a flow through the filling pipe. A lower end of the tube can be fed into a folding device (not shown) in which a transversal sealing is made, the tube is folded according to folding lines, also referred to as weakening lines, and cut off such that packages 308 can be formed.

The packaging machine 304 comprises a control system 305. The control system 305 may be configured to carry out overall control of functions and operations of the packaging machine 304.

The food production system 300 further comprises an image data capturing device 306. The image data capturing device 306 is arranged at a position along the web 402 of packaging material. The image data capturing device 306 may be arranged at any position along the web 402 between the reel 302 and a tube forming device configured to form the tube. The image data capturing device 306 is configured to capture image data depicting a section of the web 402 of packaging material. The image data capturing device 306 may be arranged within the packaging machine 304. However, as readily understood by the skilled person, the image data capturing device 306 may be arranged outside of the packaging machine 304 as well. The food production system 300 may comprise one or more image data capturing devices arranged at different positions along the web 402 of packaging material. The image data capturing device 306 may be any camera or other image capturing device suitable for generating image data that can be used for identifying anomalies of the web 402 of packaging material. The image data capturing device 306 may comprise a light source adapted to illuminate the portion of the package which the image data is captured of. The light source may use visible light, infrared (IR) light, ultraviolet (UV) light, or any combination thereof. The light source may provide visible light at wave lengths of about 380 to 740 nanometers (nm). The light source may provide IR light at wave lengths of about 740 nm to 1 mm. The light source may provide UV light at wave lengths of about 1 to 380 nm.

The food production system 300 further comprises a quality control apparatus 200 for performing quality control of packages produced in the roll-fed packaging machine 304. The quality control apparatus 200 is a quality control apparatus 200 as described above in connection with Fig. 2. As illustrated herein, the quality control apparatus 200 may be provided as an integrated apparatus of the packaging machine 304. The quality control apparatus 200 is herein illustrated as being communicatively connected to the control system 305 of the packaging machine 304. The quality control apparatus 200 may be integrated within the control system 305 of the packaging machine 304. Alternatively, the quality control apparatus 200 may be provided as a separate apparatus from the packaging machine 304 and communicatively connected thereto. For example, the quality control apparatus 200 may be provided as a remote server, e.g. implemented in the cloud 322. The quality control apparatus 200 is communicatively connected to the image data capturing device 306. Even though the image data capturing device 306 is illustrated as separate from the quality control apparatus 200, the image data capturing device 306 may be part of the quality control apparatus 200.

As described above in connection with Fig. 1 and Fig. 2, the quality control apparatus 200 can obtain image data depicting a section of the web 402 of packaging material. Herein, the quality control apparatus 200 receives the image data from the image data capturing device 306 through any suitable communication protocol. Optionally, a package identifier (ID) of the package associated with the image data may also be received. Alternatively, the quality control apparatus 200 may obtain the image data from the control system 305 of the packaging machine 304 which in turn receives the image data from the image data capturing device 404. In return, the quality control apparatus 200 communicates a signal indicating an action to be performed to the control system 305 of the packaging machine 304. Optionally, the quality control apparatus 200 transmits updated settings to the packaging machine 304.

The food production system 300 may further comprise a package reject unit 310. The package reject unit 310 may be configured to either keep or discard packages based on a received signal. The quality control apparatus 200 may be communicatively connected to the package reject unit 310. The quality control apparatus 200 may transmit an action of either reject or accept a package to the package reject unit 310. The package identifier (ID) of the package associated with the action may further be transmitted. Based on the action, the package reject unit 310 may discard or keep the package. The discarded packages 312 may be collected by a recycling unit 314 for recycling the product of the discarded packages. The accepted packages 316 may be sent further down the food production system 300.

The food production system 300 may further comprise a quality control station 318. The quality control station 318 may serve as a secondary quality control system of the food production system 300 for performing other types of quality controls of the packages 308 than the quality control apparatus 200 described herein.

The quality control station 318 may be arranged to receive the accepted packages 316 for further evaluation. Even though not illustrated, the quality control station may 318 may be arranged to receive the rejected packages 312 for further evaluation. The quality control station 318 is herein illustrated downstream from the package reject unit 310. However, the quality control station 318 may be arranged upstream of the package reject unit 310 for evaluating the packages 308 produced by the packaging machine 304 directly. The quality control station 318 may be part of the quality control apparatus 200 for providing feedback to the machine learning model.

The quality control station 318 may comprise a user interface 324 (such as an operator panel), configured to display image data captured by the image data capturing device 306, for a user 320 (e.g. a machine operator) to see. In particular, the quality control station 318 may allow the user to determine whether or not any anomalies has been correctly identified (if anomaly is present) or incorrectly identified (if anomaly is not present). This information (i.e. if a package is a false negative FN (or true negative TN) or false positive FP (or true positive TP) may be sent to the quality control apparatus 200. It goes without saying that if packages are determined as either FN or FP, this can also give information about TN and TP. The information about false negatives (optionally also true negatives) and/or false positives (optionally also true positives) may be used by the quality control apparatus 200 in re-training of the machine learning model. The feedback from the user 320 may further be used in labeling any image data collected for re-training the machine learning model.

It should be noted that one or more parts of the food production system 300 may be implemented in the cloud 322. For example, the machine learning model of the quality control apparatus 200 may be deployed in the could 322. Thus, the same machine learning model may be used in several food production systems 300. As another example, any data relevant for training of the machine learning model (e.g. image data depicting new types of anomalies) may be transmitted to the cloud 322 and distributed to other food production systems 300 for allowing re-training of machine learning models of the other food production systems 300.

Figures 4A to 4D illustrates, by way of example, different ways of positioning an image data capturing device 404, 404' in relation to a web 402 of packaging material. As described above in connection with Fig. 1 to 3, the image data capturing device 404 is arranged at a position along the web 402 of packaging material. It should be noted that the Figures 4A to 4D are merely to be seen as non-limiting examples, and that e.g. sizes and shapes of layers and regions are exaggerated for illustrative purposes and, thus, are provided to illustrate the general structures and ideas rather than representing a real-world scenario.

Fig. 4A illustrates a portion of the web of packaging material 402 within a roll-fed packaging machine in a cross-sectional side view (along a direction x). A feed direction of the web 402 is indicated by bold arrows. The web of packaging material 402 has a first side 408a and a second side 408b. Herein, an image data capturing device 404 is arranged to capture imaged depicting a section of the first side 408a of the web 402. The first side 408a may be a non-printed side of the packaging material. The non-printed side may be an inside of a later formed package.

As stated above, the image data capturing device 404 may be a linear camera, as illustrated herein. A field of view of the image data capturing device 404 is illustrated by broken lines. Since, in the present example, an linear camera is shown in side view, the field of view is illustrated as a single line.

Advantageously, the image data capturing device 404 may be arranged at a vicinity of a roller of the roll-fed packaging machine where vibrations or other movements of the web 402 reduced. The image data capturing device 404 of the present example, is arranged at a position of a roller 406 of the packaging machine where the web of packaging material 402 is in contact with the roller 406.

Fig. 4B illustrates a portion of the web of packaging material 402 in a cross-sectional view through the feed direction of the web 402 (i.e. the y-direction). In the presently illustrated example, the image data capturing device 404 is arranged to capture images depicting a section of the web 402 which spans over the full width of the web 402. In other words, the field of view of the image data capturing device 404 in the lateral direction of the web 402 (i.e. the x-direction) may cover the whole first side 408a of the web 402.

Fig. 4C illustrates a portion of the web of packaging material 402 in a top-down view of the web 402 (i.e. in the z-direction). Fig. 4D illustrates the same example as in Fig. 4C, but in a cross-sectional view through the feed direction of the web 402 (i.e. the y-direction). The web 402 is further illustrated with a number of anomalies 412a, 412b, 412c which may be identified using the presently disclosed technologies. The anomalies may e.g. represent ruptures 412a, 412c and creases 412b of the packaging material. However, as is clear from above, other anomalies of the web of packaging material 402 may be identified as well.

The image data capturing device 404 is herein arranged at a position of an edge section 410a (also referred to as a first edge section) of the web 402. Thus, the image data capturing device 404 may be configured to capture image data depicting a section of the edge section 410a of the web 402. The edge section 410a may be formed by an outer portion of the web 402, e.g. within a distance d from an outmost edge 414 of the web 402. As is readily understood by the skilled person, an additional edge section 41 0a' (also referred to as a second edge section) of the web 402 (opposite from the edge section 410a) may also be part of the quality control. Thus, an additional image data capturing device 404' may be provided, configured to capture image data depicting a section of the additional edge section 410a' of the web. The additional edge section 410a' may span over a distance d' from an additional edge 414' of the web 402. The distance d' may be the same as, or different from the distance d.

Anomalies of the web of packaging material 402 may also be present in an inner section 410b of the web 402. Even though not illustrated in Fig. 4C, an image data capturing device may be arranged at a position such that image data of the inner section 410b can be captured.

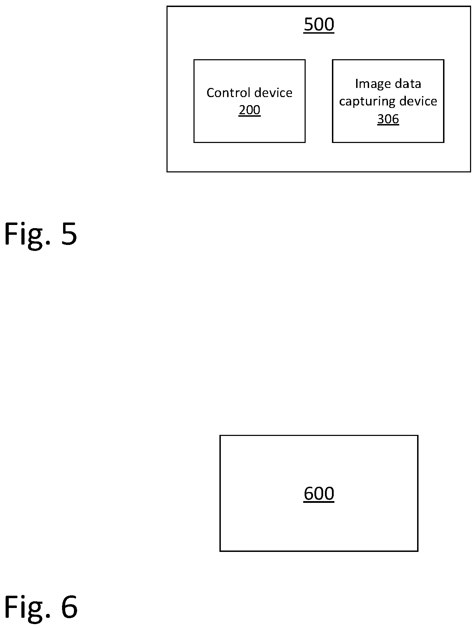

Figure 5 schematically illustrates an upgrade kit 500. The upgrade kit 500 can be applied on a roll-fed packaging machine, such as the roll-fed packaging machine 304 as described above in connection with Fig. 3. The upgrade kit 500 is configured for enabling quality control of packages produced in the roll-fed packaging machine 304. The upgrade kit 500 comprises an image data capturing device 306, e.g. such as the image data capturing device as described above in connection with Fig. 3. The upgrade kit 500 further comprises a quality control apparatus, such as the quality control apparatus 200 as described above in connection with Fig. 2.

Figure 6 illustrates a non-transitory computer-readable storage medium 600. The non-transitory computer-readable storage medium 600 stores one or more programs configured to be executed by one or more processors of a processing system, the one or more programs comprising instructions for performing the method 100 as described above in connection with Fig. 1.

Even though not illustrated, the method 100 may be implemented in a computer program product. The computer program product comprises instructions which, when the program is executed by a computer, cause the computer to carry out the steps of the method 100, with reference to Fig. 1.

Additionally, variations to the disclosed variants can be understood and effected by the skilled person in practicing the claimed invention, from a study of the drawings, the disclosure, and the appended claims.

## Claims

1. A method (100) for quality control of packages produced in a roll-fed packaging machine, wherein the roll-fed packaging machine comprises an image data capturing device arranged at a position along a web of packaging material, the method (100) comprising:
obtaining (S102) image data depicting a section of the web, from the image data capturing device;
identifying (S104) an anomaly in the section of the web of packaging material, using a machine learning model trained to identify anomalies in image data of a web of packaging material; and
communicating (S112), in response to the identified anomaly, a signal indicating an action to be performed, to a control system of the packaging machine.

2. The method (100) according to claim 1, wherein:
- the image data depicts an edge section of the web, and wherein identifying (S104) the anomaly comprises identifying the anomaly in the edge section of the web of packaging material, and/or
- identifying (S104) the anomaly comprises identifying presence of a splice and/or an anomaly associated to the splice.

3. The method (100) according to claim 1 or 2, wherein identifying (S104) the anomaly comprises:
determining (S106), in the image data, data indicative of the anomaly, and
classifying (S108) the data indicative of the anomaly as representing an anomaly or not.

4. The method (100) according to claim 3, wherein classifying (S108) the data indicative of an anomaly as representing an anomaly further comprises determining a type and/or degree of severity of the anomaly, and
wherein the method (100) further comprises determining (S110) the action to be performed based on the type and/or degree of severity of the anomaly.

5. The method (100) according to any one of claims 1 to 4, wherein the action is any one of (i) rejecting or accepting the package comprising the anomaly, (ii) sending a notification signal to an operator of the packaging machine, (iii) stopping the packaging machine and (iv) adjusting settings of the packaging machine.

6. The method (100) according to any of the claims 1 to 5, wherein the image data of the section of the web is associated with a package to be formed, and
wherein communicating (S112) the signal indicating the action to be performed further comprises communicating (S114) a package identifier of the package associated with the image data.

7. The method (100) according to any one of claims 1 to 6, further comprising:
collecting (S116) the image data as training data, and
re-training (S118) the machine learning model based on the training data.

8. The method (100) according to any one of claims 1 to 7, wherein the image data capturing device is a linear camera.

9. The method (100) according to claim 8, wherein the linear camera is arranged to capture image data of the web of packaging material at a position of a roller in the roll-fed packaging machine.

10. The method (100) according to any one of claims 1 to 9, wherein the image data depicts a non-printed side of the packaging material.

11. A quality control apparatus (200) for quality control of packages produced in a roll-fed packaging machine, wherein the roll-fed packaging machine comprises an image data capturing device arranged at a position along a web of packaging material, the control device (200) comprising circuitry (202) configured to execute:
an obtaining function (S210) configured to obtain image data depicting an section of the web, from the image data capturing device;
an identifying function (212) configured to identify an anomaly in the section of the web of packaging material, using a machine learning model trained to identify anomalies in image data of a web of packaging material; and
a communicating function (214) configured to, in response to the identified anomaly, communicate a signal indicating an action to be performed, to a control system of the packaging machine.

12. The quality control apparatus (200) according to claim 11, wherein identifying the anomaly by the identifying function (212) comprises:
determining, in the image data, data indicative of the anomaly, and
classifying the data indicative of the anomaly as representing an anomaly or not.

13. Food production system (300) comprising:
a roll-fed packaging machine (304) configured to produce packages (308),
an image data capturing device (306) arranged at a position along a web (402) of packaging material in the roll-fed packaging machine and configured to capture image data depicting a section (406a, 406b) of the web (402) of packaging material, and
a quality control apparatus (200) for quality control of packages produced in a roll-fed packaging machine according to claim 11 or 12.

14. An upgrade kit (500) to be applied on a roll-fed packaging machine (304) for performing quality control, the upgrade kit (500) comprising:
an image data capturing device (306); and
a quality control apparatus (200) according to claim 11 or 12.

15. A non-transitory computer-readable storage medium storing one or more programs configured to be executed by one or more processors of a processing system, the one or more programs comprising instructions for performing the method (100) according to any one of claims 1-10.
